# EUROPEAN PATENT APPLICATION

(11) **EP 1 158 635 A2**
(43) Date of publication of application: **28.11.2001**
(21) Application number: 01610051.3
(22) Date of filing: 23.05.2001
(51) Int. Cl.: H02G 3/14

(54) **A cover for electrical installation material**

(30) Priority: 25.05.2000 DK 200000833
(71) Applicant: Lexel A/S, 1472 Copenhagen K (DK)
(72) Inventor: Larsen, Henrik Wulff, 4700 Naestved (DK); Juhl, Jorgen, 3520 Farum (DK)
(74) Representative: Wittrup, Flemming

(57) **Abstract**

The invention relates to a cover for enclosing electrical installation material, e.g. switches. The invention is characterized in that the cover comprises a bottom frame (8) which encloses the installation material entirely or partly, and that side panels, e.g. top (4) and bottom (5), are provided on the bottom frame, of which at least one side panel may be mounted releasably on the bottom frame at different distances from the installation material, and that filling panels (15, 16) are provided between the installation material and a side panel (4, 5).

## Description

The invention relates to a cover for enclosing electrical installation material, such as switches.

Such material is known e.g. from Norwegian Published Application No. 151 989, German Offenlegungsschrift 31 29 061 and DK/EP 0 706 247.

The Norwegian published application relates to a technique in which a rectangular cover frame is divided into sections by means of transverse members that are positioned between several adjoining switches.

German Offenlegungsschrift 31 29 061 and DK/EP 0 706 047 disclose cover frames with separation lines so that part of a cover frame may be broken off, thereby allowing several cover frames to be joined to a composite unit.

The prior art thus concerns features for solving some of the practical problems in connection with the building together of electrical installation material.

The object of the invention is to provide a cover which provides several different possibilities for the construction of the cover frame e.g. for purposes of appearance or information.

This object is achieved in that the cover comprises a frame which encloses the installation material entirely or partly, and that side panels are provided on the frame, of which at least one side panel may be mounted detachably on the bottom frame at different distances from the installation material, and that filling panels are provided between the installation material and a side panel. Side panel is used herein as a general term for the rim parts of the cover that may comprise both top, bottom and sides.

For a given electrical installation material, such as a switch, several different covers of different appearance may be provided according to the invention. The cover may thus comprise a pair of narrow or wide filling panels which are positioned between the installation material and the top and bottom panels. Such filling panels may either be flush with the adjoining side panel or be positioned in front of or deeper than the adjoining side panel. The filling panels may have different colours or may be transparent so that they can transmit light, and the filling panels may moreover be provided with information. The filling panels are available with different surfaces and different material.

The frame may extend all the way round the electrical installation material, but it is also possible that the frame consists of several parts which are kept together by one or more of the side panels. With a rectangular cover, a pair of opposed side panels may be integrated together with the bottom frame, while the other pair of opposed top and bottom frames are movable on the frame to accommodate a filling panel of a desired width.

The electrical installation material may also have other shapes, e.g. a round shape, and in that case the side panels may comprise arcs that enclose the electrical installation material, at least some of the side panels being mounted detachably on the bottom frame at different radial distances from the electrical installation material. The associated filling panels will typically comprise an arc-shaped part and a radial part which are positioned between the side panels and the electrical installation material, respectively.

The filling panels may be fixedly secured on the frame.

According to the invention, the filling panels may also be contiguous with the electrical installation material, e.g. contiguous with a key on a switch.

The invention will be explained more fully in the following description of some embodiments with reference to the drawing, in which
figs. 1 and 2 show a switch of two different designs,
fig. 3 shows a first embodiment of a cover according to the invention, seen from the rear side,
fig. 4 shows details of the cover shown in fig. 3,
figs. 5 and 6 show variants of the cover according to the invention, while
figs. 7 and 8 show alternative embodiments of the invention in connection with round switches.

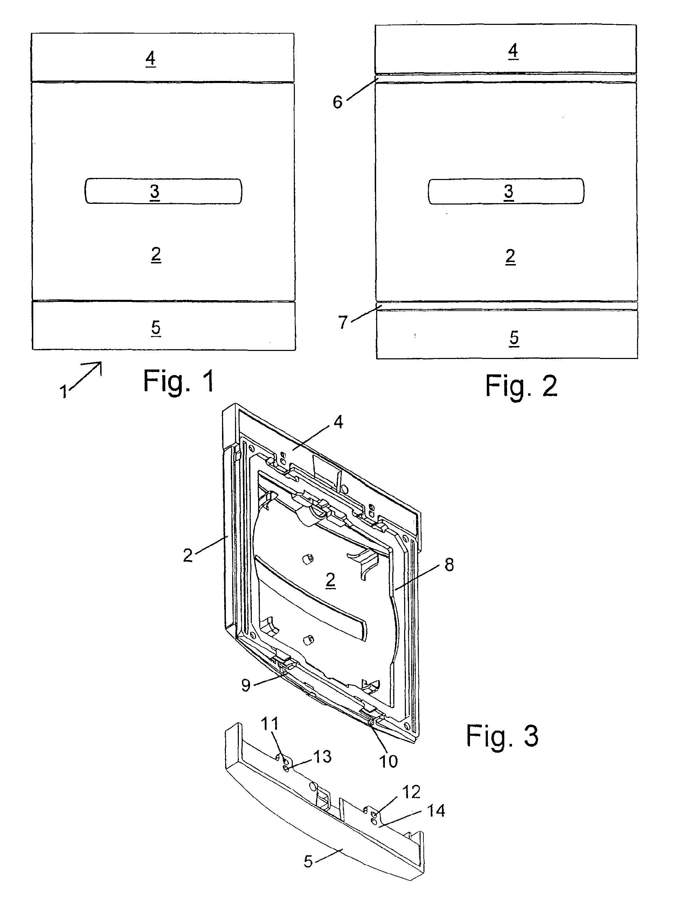

Fig. 1 shows an example of electrical installation material, viz. a switch 1 which comprises a shield 2 and a key 3. There is also a cover which encloses the switch so that a top panel 4 and a bottom panel 5 are visible, while the shield 2 conceals the sides of the cover. In other embodiments there may be side panels which extend externally of the shield 2.

Fig. 2 shows the same as fig. 1, but with the change according to the invention that it is possible to move the top panel 4 and the bottom panel 5 somewhat upwards and downwards, respectively, on the cover, thereby accommodating a pair of filling panels 6 and 7, respectively. As will be explained later, the filling panels 6 and 7 may be arranged detachably on a frame associated with the cover, but one or both of the filling panels may also be contiguous with the shield 2.

This constructively very simple variation possibility from the switch shown in fig. 1 to the switch shown in fig. 2 involves many variations of design. This may be utilized either for making it possible to distinguish one type of installation material from another type in a house, or for realizing a quite personal style for switches, plug outlets and other electrical installation material in one's house. The filling panels may be made of different materials with different surfaces and different colours. In one design, top and bottom panels as well as shield may be black, while the filling panels may be metallized and imitate e.g. gold, and in another design the top and bottom panels as well as the shield may have an appearance with a brushed metal surface, while the panels may have strong pastel shades. In other embodiments, the panels can transmit light which is emitted internally from the electrical installation material.

Fig. 3 shows some constructional details of the embodiment shown in fig. 1. The shield 2 is seen from the rear side and its front side obliquely to the left in fig. 3.

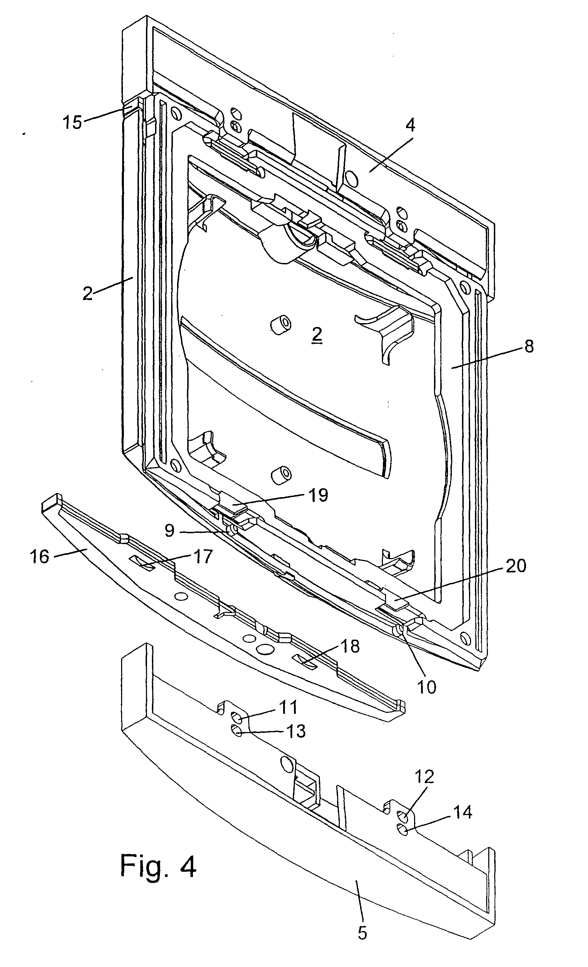

The cover according to the invention comprises a frame 8 which encloses the electrical installation material (not shown). The frame 8 is shown as an annular unit, but may also consist of several interconnected parts in another embodiment. The top panel 4 is shown mounted on the frame 8, while the bottom panel 5 is shown in a non-mounted position. According to the invention, the top and bottom panels may be arranged in various positions on the frame 8. Fig. 3 shows a pair of pins 9 and 10 which are adapted to be received in holes 11 and 12 or 13 and 14, respectively. If the pins 9, 10 are received in the holes 13 and 14 the bottom panel 5 will be positioned closely against the shield 2, as is the case with the mounted top panel 4, but if the pins 9 and 10 are received in the holes 11 and 12, the bottom panel 5 will be spaced somewhat from the shield 2. In the event that the shield and the panels are spaced from each other, there will be room for accommodating a filling panel. This is shown in greater detail in fig. 4.

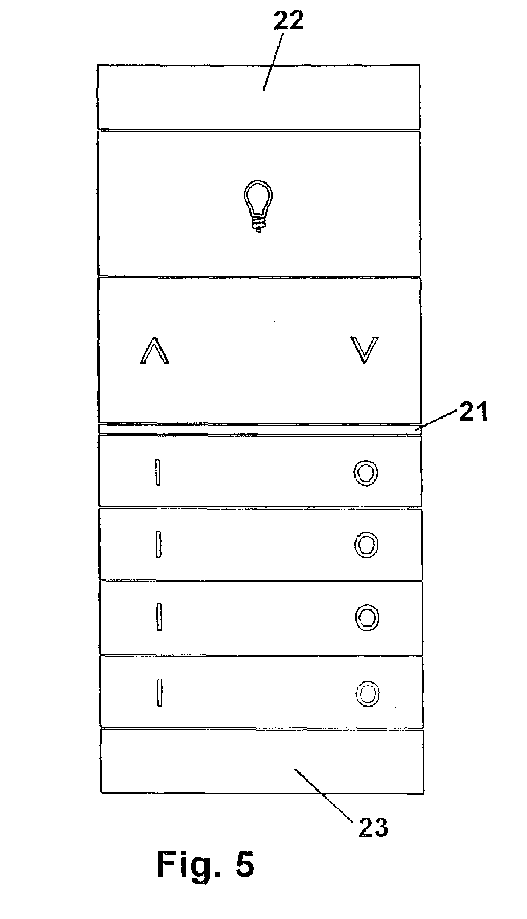

In fig. 4, the parts which are also shown in fig. 3 are provided with a reference numeral. At the top of fig. 4 it can be seen that the top panel 4 is arranged such that there is a space between it and the shield 2. The space is filled with a filling panel 15. At the bottom of fig. 4 a corresponding filling panel 16 is visible, which is provided with some notches 17, 18 that are adapted to cooperate with locking hooks 19 and 20 in the frame 8. Hereby, according to the invention, it is easy to replace the filling panels by panels of a different appearance, and it is also quite easy to replace top and/or bottom panel and shield. Thus, it is possible for a user entirely to replace the visible parts of the electrical installation material e.g. in connection with changing furniture style in a room or repapering or painting in an entirely new style. The explanation below in connection with figs. 5-8 is to illustrate how flexible and versatile the cover can be made according to the invention.

Fig. 5 shows an example where two switch modules are positioned side by side. It will be seen that there is no filling panel between the uppermost switch module and the top panel 22, as is also the case between the lowermost switch module and the bottom panel 23. On the other hand, a filling panel 21 is inserted between the two switch modules. The frame carrying the top and bottom panels 22 and 23 is concealed behind the shown keys that occupy the entire front face in contrast to the keys 3 on the previously described embodiments. It will be appreciated that the top and bottom panels may be moved somewhat upwards and downwards to make room for more filling panels, and it is also within the scope of the invention to move a panel so far out that there is room for two or more filling panels.

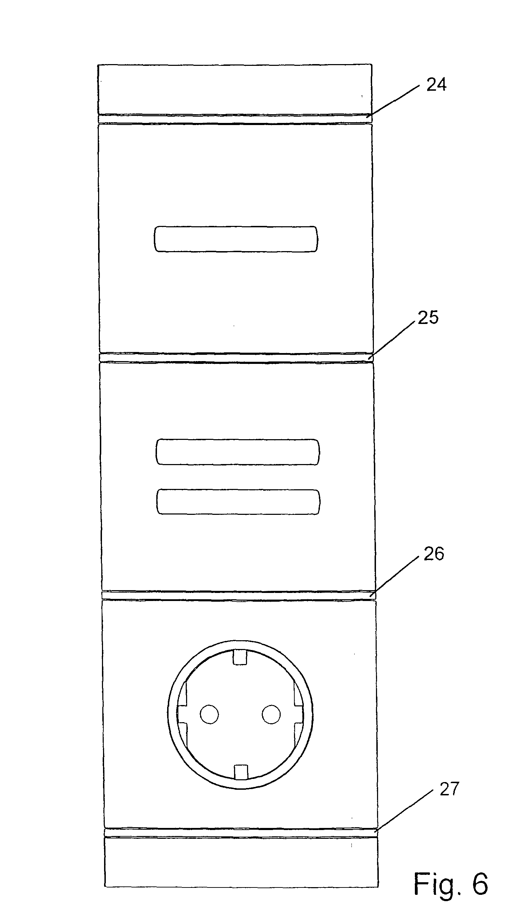

Fig. 6 shows an embodiment where three modules for electrical installation material are mounted against each other, there being from top to bottom a switch, a two-way switch and a plug. It appears from fig. 6 that this embodiment includes filling panels 24-27.

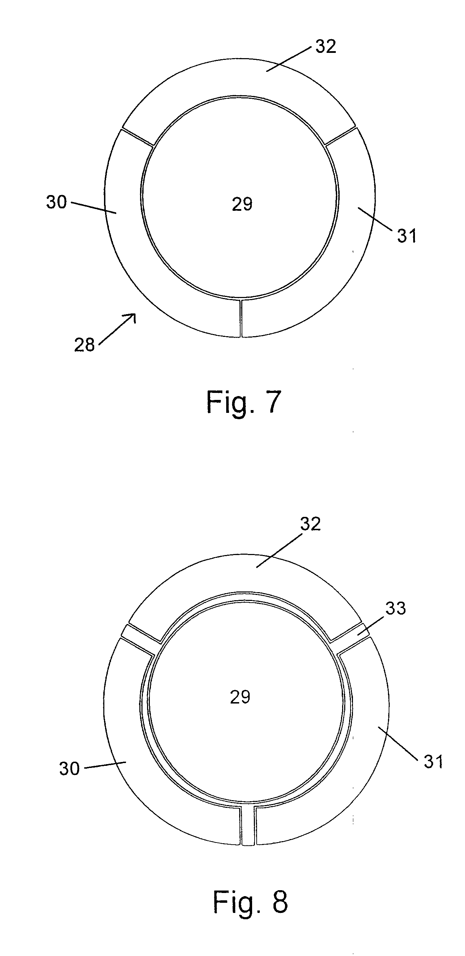

Figs. 7 and 8 show how the invention may also be used in connection with installation material which is round, e.g. a round switch 28. The switch 28 comprises an operating face 29 which may be a key or a touch plate. In this embodiment of the cover according to the invention there are three side panels 30, 31, 32, which are arranged on a frame that is concealed in fig. 7 by the key 29 and the side panels 30-32. According to the invention, the side panels 30-32 may be moved radially outwards on the rearwardly positioned frame to the position shown in fig. 8 so as to leave spaces between the side panels and the key 29. These spaces accommodate a filling panel 33 which may either be an unbroken piece or be divided into thirds. It is hereby possible to achieve the same versatility in design as explained in connection with the previous embodiments, and it will then also be appreciated that the geometrical shape of the electrical installation material has no limiting effect on the utilization of the cover according to the invention.

## Claims

1. A cover for enclosing electrical installation material, e.g. switches, **characterized in that** the cover comprises a frame which encircles the installation material entirely or partly, and that side panels are provided on the frame, of which at least one side panel may be mounted detachably on the frame at different distances from the installation material, and that filling panels are provided between the installation material and a side panel.

2. A cover according to claim 1, **characterized in that** the bottom frame extends uninterruptedly around the electrical installation material.

3. A cover according to claim 1 or 2, wherein the installation material is rectangular, **characterized in that** a pair of opposed sides of the bottom frame is adapted to receive side panels with different mutual distances.

4. A cover according to claims 1-3, **characterized in that** the pair of opposed side panels is contiguous with the bottom frame.

5. A cover according to claims 1-4, wherein the cover is adapted to enclose several switches side by side, **characterized in that** the cover is adapted to receive at least one filling panel positioned between the switches.

6. A cover according to claim 1 or 2, wherein the electrical installation material is round, **characterized in that** the side panels constitute arcs which together enclose the electrical installation material, at least some side panels being adapted for releasable mounting on the bottom frame at different radial distances from the electrical installation material.

7. A cover according to claim 6, **characterized in that** the filling panels comprise an arc-shaped part and a radial part.

8. A cover according to claims 1-7, **characterized in that** the filling panels are provided in widths which correspond to the mutual distances of the adjoining side panels.

9. A cover according to claims 1-8, **characterized in that** the filling panels are flush with the adjoining side panel.

10. A cover according to claims 1-9, **characterized in that** the filling panels have different colours.

11. A cover according to claims 1-10, **characterized in that** the filling panels are transparent.

12. A cover according to claims 1-11, **characterized in that** the filling panels are provided with information.

13. A cover according to claims 1-12, **characterized in that** at least some filling panels are contiguous with the electrical installation material.

14. A cover according to claims 1-12, **characterized in that** at least some of the filling panels are fixedly secured on the frame.
